# EUROPÄISCHE PATENTANMELDUNG

(11) **EP 1 245 703 A1**
(43) Veröffentlichungstag der Anmeldung: **02.10.2002**
(21) Anmeldenummer: 02006082.8
(22) Anmeldetag: 18.03.2002
(51) Int. Cl.: C30B 35/00, C04B 35/14, C03C 3/06, C03B 19/06

(54) **Verfahren für die Herstellung eines Komposit-Werkstoffs mit einem SIO2-Gehalt von mindestens 99 Gew.-%, nach dem Verfahren erhaltener Komposit-Werkstoff und Verwendung desselben**

(30) Priorität: 24.03.2001 DE 10114484
(71) Anmelder: Heraeus Quarzglas GmbH & Co. KG, 63450 Hanau (DE)
(72) Erfinder: Werdecker, Waltraud, 63456 Hanau (DE); Gertig, Udo, 63867 Johannesberg (DE); Leist, Johann, 63674 Altenstadt (DE); Köppler, Rainer, 63500 Seligenstadt (DE)
(74) Vertreter: Staudt, Armin, Dipl.-Ing.

(57) **Zusammenfassung**

Es ist ein Verfahren für die Herstellung eines Komposit-Werkstoffs mit einer SiO₂haltigen Matrix in der eine Quarzglaskörnung eingebettet ist, bekannt, bei welchem eine Suspension aus einer Teilchenmischung aus feinteiligem, mindestens zwei unterschiedliche Teilchenfraktionen aufweisenden SiO₂-Pulver und der Quarzglaskörnung hergestellt wird, daraus ein Grünkörper geformt und dieser gesintert wird. Um hiervon eine kostengünstige Herstellung eines Komposit-Werkstoffs mit hoher Temperaturwechselbeständigkeit bei gleichzeitig hoher Dichte zu ermöglichen, wird erfindungsgemäß vorgeschlagen, dass die Matrix einen SiO₂-Gehalt von mindestens 99 Gew.-% aufweist und aus mindestens einer ersten (33) und einer zweiten (35) Teilchenfraktion, die jeweils als Granulate nanoskaliger, amorpher, synthetisch erzeugter SiO₂-Primärteilchen (2) mit einer mittleren Primärteilchengröße von weniger als 100 nm vorliegen, gebildet wird. Der nach dem Verfahren hergestellte Komposit-Werkstoff, zeichnet sich durch eine SiO₂-haltige Matrix aus, die einen SiO₂-Gehalt von mindestens 99 Gew.-% aufweist. Er ist für Anwendungen, bei denen es auf Temperaturfestigkeit, Dichtheit und hohe Reinheit ankommt besonders geeignet, wie zum Beispiel als Ausgangsmaterial für die Herstellung einer Kokille zum Schmelzen von Solarsilizium.

## Beschreibung

Die Erfindung betrifft ein Verfahren für die Herstellung eines Komposit-Werkstoffs mit einem hohen SiO₂-Gehalt, bei welchem in einer SiO₂-haltigen Matrix eine Quarzglaskörnung eingebettet ist, umfassend die Verfahrensschritte: Herstellen einer Suspension aus einer Teilchenmischung aus feinteiligem, mindestens zwei unterschiedliche Teilchenfraktionen aufweisenden SiO₂-Pulver und der Quarzglaskörnung, Formen der Suspension zu einem Grünkörper, und Sintern des Grünkörpers.

Weiterhin betrifft die Erfindung einen Komposit-Werkstoff, der eine SiO₂-haltige Matrix aufweist, in welcher Quarzglaskörnung eingebettet ist.

Außerdem betrifft die Erfindung eine Verwendung des erfindungsgemäßen Komposit-Werkstoffs.

Bauteile aus einem Komposit-Werkstoff mit einem hohen SiO₂-Gehalt von mindestens 99 Gew.-% zeichnen sich durch einen niedrigen Ausdehnungskoeffizienten und durch hohe chemische Beständigkeit aus. Derartige Bauteile werden zum Beispiel in der Metallurgie eingesetzt, etwa als Form von Tiegeln zum Schmelzen von Metallen, Düsen, Schutzrohren oder Gießrinnen.

Ein Komposit-Werkstoff gemäß der eingangs genannten Gattung und ein Verfahren zur Herstellung eines feuerfesten, gesinterten Kieselglasgegenstandes sind aus der DE 693 06 169 (T2) bekannt. Darin wird ein Verfahren beschrieben, bei dem als Ausgangsstoffe zwei SiO₂-Pulver mit unterschiedlichen Teilchengrößen eingesetzt werden, die eine Bindephase für eine weitere SiO₂-haltige Komponente in Form von groben SiO₂-Körnern mit einer Korngröße zwischen 40 µm und 1000 µm. Die beiden feinkörnigeren SiO₂-Pulver liegen zum einen als Quarzstaub vor, der aus im wesentlichen kugelförmigen Teilchen gebildet wird, bzw. als feinkörnige SiO₂-Teilchen einer Teilchengröße unterhalb von 40 µm. Diese Komponenten werden in einem Trockenmahlverfahren vorgemischt und anschließend wird daraus unter Zusatz eines Stabilisators ein Schlicker hergestellt. Die Gewichtsanteile der einzelnen Komponenten betragen in der Reihenfolge ihrer obigen Nennung 54% (grobe SiO₂-Körner), 33% (feinkörnige SiO₂-Teilchen) und 13% (Quarzstaub). Der Schlicker wird in Vakuum entgast und in eine Gipsform gegossen. Der so hergestellte Grünkörper wird getrocknet und in einem Ofen bei 1050 °C zu dem Komposit-Bauteil gesintert. Für die Mikrostruktur des Bauteils sind grobe Quarzglaskörner, die in einer relativ kontinuierlichen Matrix aus feineren Teilchen und aus kugelförmigen Teilchen aus Quarzstaub eingebettet sind charakteristisch. Das Bauteil weist eine offene Porosität von 13 % auf, und seine Dichte liegt bei1,91 g/cm³. Die kristallographische Analyse ergibt einen Cristobalitgehalt von weniger als 2%.

Aufgrund seiner offenen - das heißt durchgehenden - Porosität ist der bekannte Komposit-Werkstoff für Bauteile, bei denen es auf Dichtheit oder hohe Reinheit ankommt, nicht uneingeschränkt einsetzbar. Metallische Schmelzen können durch die Poren in die Bauteilwandung eindringen und zu Leckagen führen. Durch höhere Sintertemperatur oder durch längere Sinterdauer wäre zwar grundsätzlich eine höhere Dichte und eine geringere Porosität erreichbar, allerdings unter Inkaufnahme einer stärkeren Cristobalitbildung. Die Cristobalitbildung wird durch Verunreinigungen der Ausgansgkomponenten oder durch etwaige Zusatzstoffe, wie Stabilisatoren und Sinterhilfsmittel, verursacht, schreitet bei erhöhter Temperatur rasch fort. Dies hätte jedoch eine verminderte Temperaturwechselbeständigkeit und eine geringere Festigkeit des Komposit-Werkstoffs zur Folge.

Der Erfindung liegt somit die Aufgabe zugrunde, ein Verfahren anzugeben, das eine kostengünstige Herstellung eines Komposit-Werkstoffs ermöglicht, der sich durch hohe Temperaturwechselbeständigkeit bei gleichzeitig hoher Dichte auszeichnet, sowie einen Komposit-Werkstoff bereitzustellen, der für Anwendungen, bei denen es auf Temperaturfestigkeit, Dichtheit und hohe Reinheit ankommt, einsetzbar ist, sowie eine geeignete Verwendung desselben anzugeben.

Hinsichtlich des Verfahrens wird diese Aufgabe ausgehend von dem oben genannten Verfahren erfindungsgemäß dadurch gelöst, dass die Matrix einen SiO₂-Gehalt von mindestens 99 Gew.-% aufweist und aus mindestens einer ersten und einer zweiten Teilchenfraktion, die jeweils als Granulate nanoskaliger, amorpher, synthetisch erzeugter SiO₂-Primärteilchen mit einer mittleren Primärteilchengröße von weniger als 100 nm vorliegen, gebildet wird.

Zur Herstellung des Komposit-Werkstoffs werden beim erfindungsgemäßen Verfahren - wie auch bei dem eingangs beschriebenen, bekannten Verfahren - ausschließlich amorphe Ausgangssubstanzen eingesetzt, so dass im Komposit-Werkstoff die (glasigen) Quarzglaskörner in einer Matrix (Bindephase) eingebettet sind, die ebenfalls im wesentlichen aus Quarzglas besteht. Dadurch, dass die beiden wesentlichen Komponenten des Komposit-Werkstoffs, nämlich "Matrix" und "Quarzglaskörner" aus amorphem SiO₂ bestehen, werden durch unterschiedliche Ausdehnungskoeffizienten hervorgerufene Spannungen vermieden. Die Matrix wird aus mindestens zwei verschiedenen Teilchenfraktionen gebildet, die - im Unterschied zum bekannten Verfahren - jeweils als Granulate nanoskaliger, amorpher, synthetisch erzeugter SiO₂-Primärteilchen ausgebildet sind.

Die Quarzglaskörner dienen als Füllstoff. Sie zeigen keine offene Porosität und begrenzen das Schrumpfen des Grünkörpers beim Sintern. Eine geschlossene Porosität der Quarzglaskörner ist für das erfindungsgemäße Verfahren unschädlich und kann - zum Beispiel zur Einstellung der gewünschten Opazität des Werkstoffs - erforderlich sein.

Die Porosität des Komposit-Werkstoffs wird im wesentlichen durch die Matrix bestimmt. Diese wird beim erfindungsgemäßen Verfahren im wesentlichen durch sinteraktive Komponenten gebildet, wie im folgenden noch näher erläutert wird. Der Einsatz mindestens zweier voneinander unterschiedlicher Teilchenfraktionen für die Bildung der Matrix ermöglicht eine höhere Packungsdichte im Grünkörper und damit einhergehend eine Optimierung von Dichte und Festigkeit des Komposit-Werkstoffs.

Diese Optimierung wird ermöglicht, indem sich die Teilchenfraktionen voneinander unterscheiden, entweder in der Größe der Granulate, ihrer Dichte oder hinsichtlich ihrer Sinterfähigkeit, wobei Dichte und Sinterfähigkeit der jeweiligen Teilchenfraktion werden im wesentlichen durch thermische Vorbehandlung eingestellt.

Dadurch, dass mindestens die erste Teilchenfraktion und die zweite Teilchenfraktion aus Granulaten bestehen, die aus nanoskaligen, amorphen SiO₂-Primärteilchen mit einer mittleren Primärteilchengröße von weniger als 100 nm gebildet werden, setzt bereits im Grünkörper-Stadium eine das spätere Sintern begünstigende Verdichtung und Verfestigung ein. Diese beruht auf einer gewissen Löslichkeit und Beweglichkeit der einzelnen SiO₂-Primärteilchen in der Suspension, die zur sogenannten "Halsbildung" zwischen benachbarten Granulaten im Grünkörper beiträgt. Beim Trocknen der mit SiO₂ angereicherten Flüssigphase im Bereich der "Hälse" verfestigen sich diese und führen zu einer festen Verbindung der einzelnen Granulat-Partikel und zu einer Verdichtung und Verfestigung des Grünkörpers, die das nachfolgende Sintern erleichtern und damit bereits bei einer niedrigen Sintertemperatur zu einer vergleichsweise hohen Dichte des Komposit-Werkstoffs führen. Die Löslichkeit einzelner Primärteilchen und der daraus gebildeten Granulate in der Suspension ist umso ausgeprägter, je größer die spezifische Oberfläche der Granulate ist. Diese - auf den nanoskaligen, amorphen SiO₂-Primärteilchen beruhenden - Effekte wirken sich sowohl auf den Grünkörper stabilisierend aus, als auch auf den Komposit-Werkstoff. Daher ermöglicht das erfindungsgemäße Verfahren ein Formen des Grünkörpers ohne Zuhilfenahme von Bindemitteln und Stabilisatoren, als auch ein Sintern des Komposit-Werkstoffs ohne Zusatz von Sinterhilfsmitteln. Somit können die mit dem Einsatz eines derartigen Zusatzstoffes einhergehenden Verunreinigungen des Komposit-Werkstoffs vermieden werden.

Aufgrund ihrer hohen Sinteraktivität tragen die nanoskaligen, amorphen SiO₂-Primärteilchen somit zu einer hohen Dichte, mechanischen Festigkeit und Reinheit des Komposit-Werkstoffs bei.

Eine Verstärkung dieser, die mechanische Festigkeit und Dichtheit fördernden Wirkung der amorphen SiO₂-Primärteilchen wird dadurch erreicht, dass das erfindungsgemäße Verfahren ein Sintern des Grünkörpers bei vergleichsweise hoher Sintertemperatur zulässt, ohne dass eine die Festigkeit des Komposit-Werkstoffs beeinträchtigende Cristobalitbildung einsetzt. Dies ist darauf zurückzuführen, dass die SiO₂-Primärteilchen synthetisch erzeugt werden, und die daraus gebildeten Granulate dementsprechend geringe Verunreinigungsgehalte aufweisen. Ein geringer Verunreinigungsgehalt erlaubt wiederum ein Sintern bei hoher Temperatur, ohne dass es zu einer Entglasung kommt, so dass sich ein Komposit-Werkstoff mit hoher Dichte und hoher Festigkeit ergibt. Die Reinheit der Granulate wird noch dadurch begünstigt, dass sie unter Ausschluss von organischen Bindemitteln, wie sie sonst bei der Granulat-Herstellung eingesetzt werden, erzeugt werden können. Wobei dies durch die oben beschriebene Verdichtungs- und Verfestigungswirkung der Primärteilchen, die auch bei der Herstellung des Granulats eintritt, ermöglicht wird.

Derartige Primärteilchen werden beispielsweise durch Flammenhydrolyse oder Oxidation von Siliziumverbindungen durch Hydrolyse nach dem sogenannten Sol-Gel-Verfahren oder in einer Flüssigkeit erhalten. Die erhaltenen feinteiligen Primärteilchen werden mittels Granulierverfahren verdichtet, wobei sich durch Zusammenlagerungen der feinteiligen Primärteilchen Granulate im Sinne der vorliegenden Erfindung ausbilden. Die Granulate weisen somit ein Vielfaches der Größe eines Primärteilchens auf. Die Größe der Primärteilchen liegt im Nanometerbereich, währen die der Granulate üblicherweise im Mikrometerbereich und darüber liegt. Verunreinigungsgehalte an Li, Na, K, Mg, Ca, Fe, Cu, Cr, Mn, Ti, und Zr in den Granulaten von insgesamt weniger als 1 Gew.-ppm sind erreichbar. Absichtlich hinzugefügte Dotierstoffe sind keine Verunreinigungen in diesem Sinn.

Besonders bewährt haben sich SiO₂-Primärteilchen, die durch Flammenhydrolyse einer Silizium enthaltenden Ausgangsverbindung hergestellt werden. Derartige SiO₂-Primärteilchen zeichnen sich durch besonders hohe Reinheit und Sinteraktivität aus, so dass ihre Granulation mittels bekannter Granulierverfahren ohne Zusatz artfremder Bindemittel erfolgen kann, da eine Bindungswirkung an den Kontaktstellen einzelner Primärteilchen durch die oben erläuterte Sol-Gel-Bindung durch arteigenes Material erreicht wird.

Es hat sich als günstig erweisen, eine erste Teilchenfraktion einzusetzen, die eine spezifische BET-Oberfläche von mindestens 40 m²/g aufweist. Diese relativ große BET-Oberfläche gewährleistet eine hohe Sinteraktivität dieser Granulate(im folgenden auch als "Fein-Granulat" bezeichnet), deren mittlere Teilchengröße typischerweise unterhalb von etwa 160 µm liegt. Die Oberfläche des Fein-Granulats setzt sich aus äußerer und innerer Oberfläche zusammen, wobei Letztere im wesentlichen durch durchgehende Porenkanäle bestimmt wird, die nach dem Sintern als geschlossene Poren vorliegen und dem Komposit-Werkstoff ein opakes Aussehen verleihen.

Es hat sich als vorteilhaft erwiesen, dass die zweite Teilchenfraktion eine geringere spezifischen BET-Oberfläche als die erste Teilchenfraktion aufweist. Aufgrund der geringeren BET-Oberfläche zeigt die zweite Teilchenfraktion eine geringere Schwindung beim Trocknen und Sintern, so dass durch den Zusatz dieser Teilchenfraktion die Formstabilität und Maßhaltigkeit des Grünkörpers beeinflusst wird. Die zweite Teilchenfraktion weist vorzugsweise eine spezifischen BET-Oberfläche von 35 m²/g oder weniger auf. Die zweite Teilchenfraktion weist bevorzugt gröbere Teilchen auf als die erste Teilchenfraktion und kann demzufolge durch thermische Behandlung ohne größere Probleme verfestigt werden. Die mittlere Teilchengröße liegt in der Regel oberhalb von 200 µm (diese zweite Teilchenfraktion wird im folgenden auch als "Grob-Granulat" bezeichnet).

Die erste und die zweite Teilchenfraktion werden vorzugsweise durch Granulation nanoskaliger, amorpher SiO₂-Teilchen und anschließender thermischer Verfestigung der erzeugten Granulate erhalten. Die thermischer Verfestigung der so erzeugten Granulate erfolgt bei einer Temperatur im Bereich von 900 °C bis 1450 °C, mit der Maßgabe dass das die Temperatur beim Sintern der ersten Teilchenfraktion niedriger ist als beim Sintern der zweiten Teilchenfraktion.

Die Quarzglaskörnung weist vorzugsweise eine spezifische BET-Oberfläche von 1 m²/g oder weniger auf. Dabei handelt es sich um amorphe Teilchen aus synthetischem SiO₂ oder aus natürlichem Rohstoff. Die Körnung weist keine oder wenige durchgehenden Poren auf und sie trägt zur Schwindung des Grünkörpers beim Trocknen und Sintern nicht bei. Sie dient im wesentlichen als Füllstoff, kann jedoch auch im Hinblick auf besondere Wirkung auf die physikalischen oder chemischen Eigenschaften des Komposit-Werkstoffs ausgewählt werden. So wird zum Beispiel zur Erhöhung der Infrarot-Durchlässigkeit des Komposit-Werkstoffs eher eine transparente Körnung bevorzugt, während eine blasenhaltige Körnung die entgegengesetzte Wirkung hat und dem Komposit-Werkstoff ein opakes Erscheinungsbild verleiht. Auf die Funktion der Quarzglaskörnung als "Füllmittel" hat die Teilchengröße keinen wesentlichen Einfluss, so dass geeignete Korngrößen im Bereich zwischen 0,1 und 4 mm liegen können.

Es hat sich als günstig erwiesen, eine Teilchenmischung einzusetzen, die zusätzlich nicht oder nur leicht agglomerierte SiO₂-Primärpartikel mit einer spezifischen BET-Oberfläche von mindestens 40 m²/g umfasst. Die SiO₂-Primärpartikeln liegen im wesentlichen in nicht agglomerierter Form vor. Ihnen kommt eine bindemittelähnliche Wirkung im Grünkörper zu, dessen Dichte und mechanische Festigkeit sie durch Förderung der Halsbildung beim Trocknen erhöhen. Darüber hinaus wirkt sich der Zusatz der Primärpartikel positiv auf die Sinteraktivität aus. Die nicht agglomerierten SiO₂-Primärpartikel werden der Teilchenmischung zusätzlich zu den oben beschriebenen Teilchenfraktionen und der Quarzglaskörnung zugesetzt, wobei sie vorzugsweise - wie im folgenden beschrieben - als Suspension vorgelegt werden.

Die Herstellung des Komposit-Werkstoffs erfolgt vorzugsweise mittels des sogenannten Schlickergießverfahrens. Dabei wird eine Suspension aus einer Flüssigkeit und mindestens einem Teil der SiO₂-haltigen Ausgangskomponenten hergestellt. Die Homogenisierung der Teilchenmischung gestaltet sich besonders einfach, wenn die SiO₂-Primärpartikel ― auch in leicht agglomerierter Form - in einer Suspension bereitgestellt werden. In diese werden anschließend auch die übrigen Ausgangskomponenten eingebracht und darin homogenisiert.

Hinsichtlich des Komposit-Werkstoffs wird die oben angegebene Aufgabe ausgehend von dem Komposit-Werkstoff der eingangs genannten Gattung erfindungsgemäß dadurch gelöst, dass die Matrix einen SiO₂-Gehalt von mindestens 99 Gew.-% aufweist.

Der erfindungsgemäße Komposit-Werkstoff zeichnet sich durch eine Matrix aus, die einen hohen SiO₂-Gehalt von mindestens 99 Gew.-% aufweist. Der hohe SiO₂-Gehalt erlaubt eine Herstellung des Komposit-Werkstoffs durch Sintern eines Grünkörpers bei vergleichsweise hoher Sintertemperatur oder langer Sinterdauer, ohne dass merklich Cristobalitbildung einsetzt. Eine Cristobalitbildung würde die Temperaturwechselbeständigkeit und Festigkeit des Komposit-Werkstoffs beeinträchtigen. Durch eine hohe Sintertemperatur und/oder lange Sinterdauer ist jedoch eine hohe Dichte und damit eine geringe offene Porosität einstellbar.

Der geringe Verunreinigungsgehalt der Matrix erlaubt somit ein Sintern bei einer - im Vergleich zum bekannten Verfahren - hohen Temperatur, und damit die Herstellung eines Komposit-Werkstoffs mit hoher Dichte, hoher Temperaturwechselbeständigkeit und hoher Festigkeit.

Die Dichte und die mechanische Festigkeit des Komposit-Werkstoffs werden im wesentlichen durch die Matrix bestimmt. Wie oben zum erfindungsgemäßen Verfahren bereits beschrieben, wird die Matrix im wesentlichen aus Agglomeraten nanoskaliger, synthetisch erzeugter, amorpher SiO₂-Primärteilchen gebildet, die bereits allein aufgrund ihrer hohen Sinteraktivität zu einer hohen Dichte und mechanischen Festigkeit des Komposit-Werkstoffs beitragen. Außerdem wird dadurch auch noch der Reinheitsgrad der Matrix begünstigt, da sie ohne Zusatz artfremder - insbesondere alkalihaltiger - Bindemittel hergestellt werden kann.

Darüber hinaus zeichnet sich der erfindungsgemäße Komposit-Werkstoff durch eine Matrix aus, die vollständig aus amorpher Phase besteht. Dadurch werden mechanische Spannungen zwischen Matrix und den darin eingebetteten Quarzglaskörnern vermieden, da Matrix und Quarzglaskörnung denselben Ausdehnungskoeffizienten aufweisen.

Es hat sich gezeigt, dass ein nach dem erfindungsgemäßen Verfahren hergestellter Komposit-Werkstoff besonders als Ausgangsmaterial für die Herstellung einer Kokille zum Schmelzen von Solarsilizium geeignet ist. Für diesen Verwendungszweck ist die Undurchlässigkeit des Werkstoffs für die Siliziumschmelze - und damit eine hohe Dichte - unabdingbar, daneben sind mechanische Festigkeit und Temperaturwechselbeständigkeit der Kokille erforderlich, wobei diese Eigenschaften erhalten werden, wenn die Kokille aus einem Komposit-Werkstoff hergestellt wird, wie er nach dem erfindungsgemäßen Verfahren erhalten wird.

Nachfolgend wird die Erfindung anhand von Ausführungsbeispielen und einer Zeichnung näher erläutert. In der Zeichnung zeigen im einzelnen
- **Figur 1**: ein typisches Korn eines durch Nassgranulation von SiO₂-Primärteilchen erhaltenen "Fein-Granulats" zum Einsatz bei dem erfindungsgemäßen Verfahren,
- **Figur 2**: ein typisches Korn eines durch Nassgranulation von SiO₂-Primärteilchen und thermischer Nachbehandlung erhaltenen "Grob-Granulats" zum Einsatz bei dem erfindungsgemäßen Verfahren, und
- **Figur 3**: ein Fließdiagramm zur Erläuterung einer Verfahrensweise zur Herstellung des Komposit-Werkstoffs anhand des erfindungsgemäßen Verfahrens

Ausgangsstoffe für die Herstellung des Komposit-Werkstoffs sind
(a) eine "Quarzglaskörnung" mit einer BET-Oberfläche von 1 m²/g und mit Korngrößen im Bereich von 1 mm bis 3 mm.
(b) ein "Fein-Granulat" mit einer spezifischen BET-Oberfläche von 45 m²/g, wobei die Größe der Granulatkörner im Bereich unterhalb von 160 µm liegt,
(c) ein "Grob-Granulat", bei dem durch thermische Verdichtung bei einer Temperatur von 1200 °C im Drehrohrofen eine spezifische BET-Oberfläche von 20 m²/g und eine Stampfdichte von 1,4 g/cm³ eingestellt worden ist. Die Größe der Granulatkörner des "Grob-Granulats" liegt im Bereich zwischen 200 µm und 500 µm, und
(d) eine Suspension leicht agglomerierter "SiO₂-Primärpartikeln", die eine spezifische BET-Oberfläche von mehr als 50m²/g und eine Größe von weniger als 100 nm aufweisen.

Nachfolgend werden zunächst die einzelnen Ausgangskomponenten und deren Herstellung anhand von Ausführungsbeispielen näher beschrieben:

Bei der Quarzglaskörnung handelt es sich um vollständig verglastes SiO₂, das zum Beispiel durch Aufbereiten (Zerkleinern und Sieben) von synthetischem Quarzglas erhalten wird. Vorzugsweise aber durch Verglasen von "SiO₂-Granulat", hergestellt aus pyrogenen SiO₂-Primärteilchen, wie im folgenden näher beschrieben wird.

Grob-Granulat und Fein-Granulat liegen als Agglomerate amorpher, durch Flammenhydrolyse von SiCl₄ erzeugter, pyrogener SiO₂-Primärteilchen vor. Diese zeichnen sich in nicht agglomerierter Form durch eine große spezifische Oberfläche (nach BET) von 60 m²/g auf, wobei die einzelnen SiO₂-Primärteilchen eine Größe von weniger als 100 nm aufweisen. Für die Herstellung der Granulate sind die üblichen Granulierverfahren, wie Nassgranulieren, Sprühgranulieren, Zentrifugalzerstäubung oder Extrudieren geeignet.

Bei der Nassgranulation wird eine wässrige Suspension der SiO₂-Primärteilchen hergestellt, der unter fortwährendem Rühren in einem Mischer Feuchtigkeit entzogen wird, bis diese unter Bildung einer körnigen Masse zerfällt. Nach dem Trocknen liegt die spezifische Oberfläche (nach BET) des so erhaltenen Granulats bei 50 m²/g, wobei die rundlichen Granulatkörner Durchmesser im Bereich von etwa 100 µm bis 1000 µm aufweisen, wobei die einzelnen Granulatkörner als Zusammenlagerung einer Vielzahl von SiO₂-Primärteilchen vorliegen.

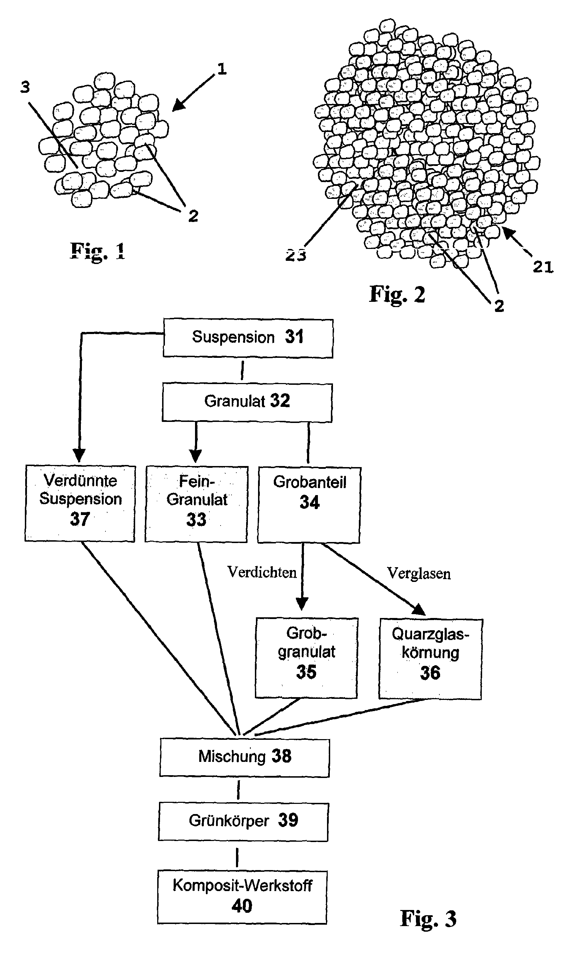

Der Feinanteil der Nassgranulation mit einem Durchmesser von weniger als 160 µm wird entweder ohne jede Nachbehandlung oder nach geringfügiger thermischer Verfestigung bei einer Temperatur von etwa 950 °C als "Fein-Granulat" zur Herstellung des Komposit-Werkstoffs eingesetzt. Ein einzelnes Korn des so erhaltenen Fein-Granulats ist schematisch in **Figur 1** dargestellt. Das Korn 1 liegt als im wesentlichen sphärisches Agglomerat einzelner SiO₂-Primärteilchen 2 mit einem Durchmesser von ca. 150 µm vor. Die SiO₂-Primärteilchen 2 sind in Figur 1 aus Darstellungsgründen vergrößert dargestellt; sie haben einen Durchmesser von etwa 50 nm. Das Agglomerat der SiO₂-Primärteilchen 2 ist lose, so dass es durch leichten mechanischen Druck zerstört werden kann. Zwischen den SiO₂-Primärteilchen 2 sind offene Porenkanäle 3 ausgebildet. Das "Fein-Granulat" hat eine spezifischen BET-Oberfläche von etwa 45 m²/g, wobei sich die Oberfläche aufgrund der inneren, durchgehenden Porenkanäle im wesentlichen als "innerer Oberfläche" darstellt. Infolge einer geringfügigen thermischen Verfestigung bei einer Temperatur von 950 °C wird die spezifische Oberfläche auch etwa 38 m²/g reduziert.

Der gröbere Anteil des oben erwähnten Nassgranulation wird nach dem Trocknen durch eine Temperaturbehandlung in einem Durchlaufofen bei einer Temperatur von ca. 1200 °C in chlorhaltiger Atmosphäre unter Bildung des "Grob-Granulats" thermisch vorverdichtet. Dabei wird das Granulat gleichzeitig gereinigt, wobei die Reinigung mittels Chlor besonders effektiv ist, da die Oberfläche der SiO₂-Primärteilchen über die Porenkanäle für das Reinigungsgas zugänglich ist und die gasförmigen Verunreinigungen leicht entfernt werden können.

Das Grob-Granulat zeichnet sich insgesamt durch eine spezifische BET-Oberfläche von 20 m²/g und eine Stampfdichte von 1,4 g/cm³ aus. Der mittlere Korndurchmesser liegt bei etwa 420 µm. Nach einer Heißchlorierung des Granulats liegt der Gesamtgehalt der Verunreinigungen an Li, Na, K, Mg, Ca, Fe, Cu, Cr, Mn, Ti, und Zr bei weniger als 500 Gew.-ppb.

**Figur 2** zeigt ein Korn 21 des thermisch verdichteten "Grob-Granulats" in schematischer Darstellung. Die einzelnen SiO₂-Primärteilchen 2 sind nach dem Sintern durch sogenannte "Halsbildung" etwas fester miteinander verwachsen. Die vor dem Sintern vorhandenen Porenkanäle sind zum großen Teil verschwunden, jedoch sind eine Vielzahl geschlossener, feiner Poren 23 vorhanden.

Nachfolgend wird die Herstellung des erfindungsgemäßen Komposit-Werkstoffs unter Einsatz der oben näher beschriebenen Ausgangskomponenten anhand **Figur 3** beispielhaft erläutert.

Die Herstellung des Komposit-Werkstoffs erfolgt mittels des sogenannten Schlikkergießverfahrens. Hierzu wird eine Suspension 31 von 14 kg eines amorphen Kieselsäurestaubs mit Teilchengrößen von 10 nm bis 100 nm und einer spezifischen Oberfläche von etwa 70 m²/g mit 17 kg entmineralisiertem Wasser hergestellt und in einem Eirich-Mischer unter allmählichem Entzug von Feuchtigkeit solange gemischt, bis das Mischgut unter Bildung eines Ausgangs-Granulats 32 zerbröselt. Das so erzeugte Ausgangs-Granulat 32 ist fließfähig, bindemittelfrei und hat eine breite Teilchengrößenverteilung, mit Teilchengrößen bis zu 4 mm. Es weist eine hohe Festigkeit auf und ist daher leicht handhabbar. Es hat eine Restfeuchte von weniger als 24 Gew.-%. Nach einer Trocknung im Drehrohrofen beträgt die Restfeuchte weniger als 1 Gew.-%.

Der Feinanteil des Granulats 32 unterhalb von 160 µm wird abgesiebt und als "Fein-Granulat" 33 zur weiteren Verwendung bereitgehalten.

Ein Teil des Grobanteils 34 (Teilchengrößen oberhalb von 160 µm) des Ausgangs-Granulats 32 wird - wie oben beschrieben - durch eine Temperaturbehandlung in einem Durchlaufofen bei einer Temperatur von ca. 1200 °C in chlorhaltiger Atmosphäre unter Bildung von "Grob-Granulat" 35 verdichtet.

Ein weiterer Teil des Grobanteils 34 wird durch eine Temperaturbehandlung bei Temperaturen oberhalb von ca. 1350 °C zu der eingangs genannten Quarzglaskörnung 36 dicht gesintert. Dabei verringert sich die spezifische Oberfläche auf Werte von weniger als 1 m²/g. Alternativ wird als Quarzglaskörnung 36 durch Zerkleinern und Sieben aufbereiteter Recyclingrohstoff aus synthetischem Quarzglas eingesetzt.

Aus einem Teil der ursprünglichen Suspension 31 wird durch Wasserzugabe eine verdünnte Suspension 37 hergestellt, in welche die restlichen SiO₂-Ausgangskomponenten (Fein-Granulat, Grob-Granulat, Quarzglaskörnung) zugemischt und in einer Kugelmühle homogenisiert werden. Die Gewichtsanteile der einzelnen SiO₂-Ausganskomponenten in der so hergestellten homogenen Suspension 38 ergeben sich aus Tabelle 1:

**Tabelle 1**

| **Ausgangskomponente** | **Gewichtsanteil in %** |
|---|---|
| SiO₂-Primärteilchen aus verdünnter Suspension 37 | 6 |
| Fein-Granulat 33 | 28 |
| Grob-Granulat 35 | 20 |
| Quarzglaskörnung 36 | 46 |

Anschließend wird aus der homogenen Suspension 38 ein Grünkörper geformt. Hierfür sind eine Vielzahl von Verfahren besonders geeignet.
1. Die Suspension wird in eine Druckgussform einer kommerziellen Druckgussmaschine gegossen und über eine poröse Kunststoffmembran unter Bildung eines porösen Grünkörpers 39 entwässert.
2. Die Suspension wird unter Zusatz einer Gel-bildenden Komponente, wie Ammoniumfluorid, in eine Kunststoffform abgegossen und nach Verfestigung ais Grunkörper - mit hohem Wassergehalt - entformt. Hierbei ist eine langsame Trocknung erforderlich, um Trocknungsrisse zu vermeiden.
3. Es wird eine homogene Suspension mit geringem Feuchtigkeitsgehalt hergestellt und dieser wird anschließend eine Gel-bildende Komponente, wie Ammoniumfluorid, zugesetzt. Dadurch wird eine zähe Masse erhalten, die in eine entsprechende Form gepresst wird und darin erstarrt.

Zum Entfernen von gebundenem Wasser wird der Grünkörper 39 bei etwa 200 °C in einem belüfteten Ofen getrocknet und anschließend bei einer Temperatur von 1430 °C zu einem opaken Formkörper 40 gesintert.

Der so erhaltene Komposit-Werkstoff 40 weist lediglich geschlossene Poren auf; seine Dichte beträgt 2,1 g/cm³. Der Komposit-Werkstoff 40 hat keine kristallinen Anteile und zeichnet sich daher durch hohe Temperaturwechselbeständigkeit sowie durch ausgezeichnete chemische Beständigkeit, insbesondere gegenüber einer Siliziumschmelze, aus. Der Komposit-Werkstoff ist daher für einen Einsatz als Kokille zum Erschmelzen von Solarsilizium prädestiniert. Aufgrund seiner hohen Dichte dringt die Siliziumschmelze nicht in die Wandung der Kokille ein.

## Patentansprüche

1. Verfahren für die Herstellung eines Komposit-Werkstoffs mit einem hohen SiO₂-Gehalt, bei welchem in einer SiO₂-haltigen Matrix eine Quarzglaskörnung eingebettet ist, umfassend die Verfahrensschritte:
Herstellen einer Suspension aus einer Teilchenmischung aus feinteiligem, mindestens zwei unterschiedliche Teilchenfraktionen aufweisenden SiO₂-Pulver und der Quarzglaskörnung, Formen der Suspension zu einem Grünkörper, und Sintern des Grünkörpors, **dadurch gekennzeichnet, dass** die Matrix einen SiO₂-Gehalt von mindestens 99 Gew.-% aufweist und aus mindestens einer ersten (33) und einer zweiten (35) Teilchenfraktion, die jeweils als Granulate nanoskaliger, amorpher, synthetisch erzeugter SiO₂-Primärteilchen (2) mit einer mittleren Primärteilchengröße von weniger als 100 nm vorliegen, gebildet wird.

2. Verfahren nach Anspruch 1, **dadurch gekennzeichnet, dass** die SiO₂-Primärteilchen (2) durch Flammenhydrolyse einer Silizium enthaltenden Ausgangsverbindung hergestellt werden.

3. Verfahren nach Anspruch 1 oder 2, **dadurch gekennzeichnet, dass** die erste Teilchenfraktion (33) eine spezifische BET-Oberfläche von mindestens 40 m²/g aufweist.

4. Verfahren nach einem der vorhergehenden Ansprüche, **dadurch gekennzeichnet, dass** die zweite Teilchenfraktion (35) eine geringere spezifische BET-Oberfläche als die erste Teilchenfraktion (33) aufweist.

5. Verfahren nach Anspruch 4, **dadurch gekennzeichnet, dass** die zweite Teilchenfraktion (35) eine spezifische BET-Oberfläche von maximal 35 m²/g aufweist.

6. Verfahren nach einem der vorhergehenden Ansprüche, **dadurch gekennzeichnet, dass** die erste (33) und die zweite (35) Teilchenfraktion durch Granulation nanoskaliger, amorpher SiO₂-Promärteilchen (2) und anschließender thermischer Verfestigung der Granulate (1; 21) erhalten werden.

7. Verfahren nach Anspruch 6, **dadurch gekennzeichnet, dass** die thermische Verfestigung durch Sintern des Granulats (1; 21) bei einer Temperatur im Bereich von 900 °C bis 1450 °C eingestellt wird, mit der Maßgabe dass das die Temperatur beim Sintern der ersten Teilchenfraktion (33) niedriger ist als beim Sintern der zweiten Teilchenfraktion (35).

8. Verfahren nach einem der vorhergehenden Ansprüche, **dadurch gekennzeichnet, dass** die Quarzglaskörnung (36) eine spezifische BET-Oberfläche von maximal 1m²/g aufweist.

9. Verfahren nach einem der vorhergehenden Ansprüche, **dadurch gekennzeichnet, dass** die Teilchenmischung (38) zusätzlich nicht oder leicht agglomerierte SiO₂-Primärpartikel mit einer spezifischen BET-Oberfläche von mindestens 40 m²/g umfasst.

10. Verfahren nach Anspruch 9, **dadurch gekennzeichnet, dass** die nicht oder leicht agglomerierten SiO₂-Primärpartikel in einer Suspension (37) bereitgestellt werden.

11. Komposit-Werkstoff, der eine SiO₂-haltige Matrix aufweist, in welcher Quarzglaskörnung eingebettet ist, **dadurch gekennzeichnet, dass** die Matrix einen SiO₂-Gehalt von mindestens 99 Gew.-% aufweist.

12. Verwendung des nach den Ansprüchen 1 bis 11 hergestellten Komposit-Werkstoffs als Ausgangsmaterial für die Herstellung einer Kokille zum Schmelzen von Solarsilizium.
